# EUROPEAN PATENT APPLICATION

(11) **EP 3 881 925 A1**
(43) Date of publication of application: **22.09.2021**
(21) Application number: 20164607.2
(22) Date of filing: 20.03.2020
(51) Int. Cl.: B01D 53/14, B01D 45/12, B01D 46/00, B01D 53/18, B01D 53/50, B01D 53/75, B01D 53/78, F23J 15/04

(54) **SMOKE TREATMENT SYSTEM AND METHOD**

(71) Applicant: KTB INVEST IVS, 8763 Rask Mølle (DK)
(72) Inventor: Trolle Bennedsgaard Rosenkilde, Kristian, 8763 Rask Mølle (DK)
(74) Representative: Patrade A/S

(57) **Abstract**

Flue gas sulfur oxides (SOx) and particulates removal system and method for removing sulfur oxides (SOx) and particulates from a flue gas arising from drying of biomaterial and/or from combustion of biomaterial, and where said flue gas is passed from a boiler and/or a drying apparatus to a stack through a flue gas duct. The system comprises a wet scrubber for removal/reduction of SOx, coarse particles as well as fly ash, and at least two particulate removal units for removal of fine dust particles. The particulate removal units are arranged downstream to the wet scrubber, and a flue gas heater is arranged between the wet scrubber and the particulate removal units.

The system may be built into a standard container, such as a 20 feet container, and is low cost and effective. The system is therefore applicable at decentral biomaterial (e.g. straw, wood etc.) fired boilers as well as decentral systems for drying biomaterial such as spent bedding with animal droppings.

## Description

### Field of the Invention

The present invention relates to a flue gas and/or drying air treatment system and a corresponding method.

### Background of the Invention

In agriculture it is slowly becoming more customary that a farmer establishes decentral heating at the farm. The decentral heating system provides heat and/or energy that is used in the farm's buildings, e.g. in houses, stables, storage or production facilities where heat is required, e.g. to process crops or other product streams, e.g. wastes. Example of waste streams may include manure or sludge from a decentral biogas plant which are dried in order to store or process the waste further.

The decentral heating system typically comprises a boiler that combusts biomaterial, such as waste crops, e.g. straw, wood chips, shavings, sawdust, straw, wood pellets or dried bedding, including dried bedding that has been used in a stable and thus also contains (dried) manure.

US2009249641A discloses a system that dries municipal wastewater sludge, e.g. in a thermal screw heater. Hot air/oil/steam is used to heat the sewage sludge. Part of the dried sludge is gasified/combusted and heat is used to heat and dry the sludge. The hot flue gas is cooled in a heat-exchanger and treated in a gas scrubber, where lime is added to remove gaseous sulphurous compounds, in particular sulphur oxides. Scrubbed flue gasses are finally passed to a particle filter. The disadvantage of this method is that only a dry or semi-dry scrubbing method can be applied for removing the SO2 emissions to avoid condensation of water in the particle filter. These scrubbing methods are less efficient than a wet scrubbing method and require an expensive solid absorbent like hydrated lime to react with the SOx. Another disadvantage is that it is difficult to keep the heat-exchanger clean as the particles will stick to the colder surface inside this unit.

EP 3155722 B1 discloses a method and a plant for utilising heat from a drying plant for drying material in the form of particulate material, e.g. wood chips, shavings, sawdust, straw, wood pellets or bedding, including bedding that has been used in a stable. The method and the plant include a drying step for drying the particulate material, which is heated by hot oil. A boiler for heating the oil is connected with means for supplying at least a partial stream of the material to the boiler for burning the material in the boiler. In addition, the boiler has means for transmitting the combustion heat from flue gas to the oil before the oil is returned to the drying chamber. The plant also includes a heat exchanger by which a partial stream of the hot oil from the boiler is heating a circulating heating medium, such as water, from a heating conduit of the heating part of a central heating system for heating and/or hot water production for one or more buildings. In front of the heat exchanger there is preferably provided a condenser condensing vapour in the drying air and transmitting the heat to the heating medium for preheating and utilisation of the heat from the drying air.

The latter system is highly suitable for use in farms as discussed above. The flue gas coming from the boiler does however contain polluting substances, in particular gaseous sulphur oxides, such as SO₂ and/or SO₃ etc. (typically mentioned simply as SOx, which represents the total sum of gaseous sulphur compounds). In addition, the flue gas contains particulate matter, such as dust and/or fly ash.

Emission of SOx as well as particulates and/or fly ash is subjected to regulation. The regulations prescribe maximum limit values for the content in the flue gas that is emitted from a combustion plant. The limit values vary from country to country. In Germany the limit values for particulates in flue gas emitted from combustion plants that are fed with biomaterial, such as straw, wood or wood waste fractions, (dried) manure, (dried) waste water or biogas sludge etc. are as low as 20 mg/Nm³, while the limit values for emission of SOx is as low as 50 mg/Nm³. Known systems suffer with the drawbacks that they are either expensive to operate and/or struggle to comply with the most stringent legislative limits of SOx and particulates, especially in small decentral biomaterial fed boilers and/or decentral drying plants that dries biomaterial.

### Object of the Invention

Thus it is an object of the present invention to provide a low cost but yet efficient system as well as method to remove or reduce the content of SOx and particulates from flue gas emissions from drying plants, in particular from apparatus that dries and/or combusts spent bedding, such as animal manure mixed with bedding, or from flue gas emissions from small scale biomaterial combustion plants or boilers.

It is also an object of the present invention to provide a system as well as method that enables decentral small plants to meet the most stringent national legislations in relation to flue gas emissions limits for SOx and- particulates/dust.

It is also an object of the present invention to provide a system as well as method that enables flue gas emissions from drying plants drying spent bedding, such as animal manure mixed with bedding, or from small scale biomaterial combustion plants to meet national emission limits for at least SOx and particulates, such as dust and/or fly ash.

Further, it is an object of the present invention to provide a compact as well as flexible system as well as method that enables flue gas emissions from drying plants drying spent bedding, such as animal manure mixed with bedding, or from small scale biomaterial combustion plants.

Finally, it is an object of the present invention to provide a system as well as method that enables reduction of flue gas emissions, in particular particulates and from drying plants drying spent bedding, such as animal manure mixed with bedding, or from small scale biomaterial combustion plants which is easily installed in connection to new or existing decentral biomaterial combustion plants, in particular combustion plants and/or drying plants installed at farms.

### Description of the Invention

These objects are met by a flue gas sulfur oxides (SOx) and particulates removal system for reducing or removing particulates and sulfur oxides (SOx) from a flue gas arising from drying of biomaterial and/or from combustion of biomaterial, and where said flue gas is passed from a boiler and/or a drying apparatus to a stack through a flue gas duct. Said system comprises
- a wet scrubber,
- at least two particulate removal units arranged downstream to the wet scrubber, and wherein a flue gas heater is arranged between the wet scrubber and the particulate removal units.

The present invention also relates to a corresponding method as discussed further below.

Hereby is obtained a low cost but yet efficient system as well as method to remove or reduce the content of SOx and particulates from flue gas emissions, and to meet stringent national emission limits for at least SOx and particulates, such as dust and/or fly ash contained in the flue gas.

The system and method is particularly applicable in combination with drying systems which dries biomaterial. The humid drying air that exits a drying apparatus that dries biomaterial contains particles that are loosened from the biomaterial during the drying procedure. The drying air must therefore be treated before being emitted to the atmosphere in order to meet emission limit values for particles in the drying air.

In particular, the system is applicable in an apparatus that utilises spent animal bedding that has been dried in a drying apparatus by aid of a medium, e.g. oil or water, which is circulated between the drying apparatus and the boiler. Thus, the present invention is in particular applicable for treating flue gas emitted from such a combined combustion and drying plant as described in EP 3155722 B1.

An example of biomaterial is animal manure mixed with bedding. Other examples of biomaterial that is dried and/or incinerated are mentioned above in the background section. Thus the method also provide a system as well as method that to meets emission levels in flue gas emissions from drying plants drying spent bedding, such as animal manure mixed with bedding, or from small scale biomaterial combustion plants. The system and method further provides a system that is compact as well as flexible and which is easily installed in connection to new or existing decentral biomaterial combustion and/or drying plants, in particular combustion plants or drying plants installed at farms.

The system comprises a wet scrubber. The wet scrubber comprises a flue gas inlet in the bottom of the wet scrubber and a flue gas outlet in the top of the wet scrubber. Ordinary tap water is preferably used as sorbent in the wet scrubber. The wet scrubber comprises means for adding water as SOx absorbent medium.

The water is injected into the wet scrubber by means of a distributor with nozzles arranged in the top of the wet scrubber. The liquid sorbent/water thus flows counter current to the flue gas inside the wet scrubber. Besides absorbing the gaseous SOx emissions, the liquid sorbent traps solid particles above approximately 10 µm by impaction forces and also the very small particles below approximately 0.1 µm by Brownian diffusion and/or thermophoretic forces. However, particles in the so-called green field gap i.e. 0.1-1 µm, are difficult to remove.

An advantage by not having the particle filter before the scrubber is that liquid sorbent traps the fly ash particles containing water soluble alkaline salts, e.g. hydroxides and/or carbonates of alkali metals, especially Na, K, Ca. Thus, the fly ash helps to maintain a sufficient high pH value of the water as required to absorb the acid SOx which saves cost for both purchasing alkaline absorbent and for the disposal of the dust from the particle filter. Only if necessary to meet the legislative limits of SOx, further alkaline substances, e.g. hydroxides and/or carbonates of alkali metals, e.g. Na, Ca or K may be added in order to increase the absorption of SOx in the wet scrubber.

Another advantage by having the wet-scrubber installed directly after the combustion chamber is that a traditional pre-cooling stage prior to a filter is saved. A bag filter can usually not stand the hot flue gas (< 250°C) and in this way the potential deposition of particles on a cold surface in a gas heat exchanger is eliminated. The heat is instead transferred to the scrubber water and eventually to e.g. a district heating system by aid of a liquid-liquid heat exchanger. This also saves installation costs which is important for small scale systems, e.g. installed at farms or similar decentral biomaterial fired boilers and/or drying plants.

It is also possible to condense the water vapour from the dryer in the scrubber whereby an expensive condenser is saved.

The liquid water injected into the hot flue gas will evaporate in the first pre-cooling stage of the scrubber and thereby increase the humidity of the gas. Likewise, the introduction of the steam from the dryer will also increase the humidity. As the temperature in the scrubber gradually decreases, the water vapour will re-condense on the particles whereby the particles will grow in size (known in the literature as condensational growth). This will significantly improve the particle removal efficiency in the scrubber.

The liquid sorbent's/water's contact with the flue gas also absorbs waste heat from the flue gas. This waste heat may be recovered by transferring the waste heat by heat exchange with a circulating liquid in particular a circulating liquid in a central heating system.

The contact between absorbent/water and flue gas in the wet scrubber also results in evaporation of water whereby the flue gas temperature is reduced and the water content in the flue gas is increased. Thereby the flue gas becomes saturated with water and its temperature equal to the dew point temperature, typically in the range of 50-60 °C. The exact temperature will depend on the inlet temperature of the water to the scrubber, size of the scrubber and the humidity of the flue gas entering the scrubber but is not crucial for the principle and functioning of the system.

This results in that a flue gas heater is arranged downstream to the wet scrubber in order to reheat the flue gas to a temperature above the dew point as discussed further below. The amount of liquid sorbent fed to the scrubber is usually in the range of 5-15 kg H2O/ Nm3 gas, in particular 8-12 kg H2O/ Nm3 gas.

The wet scrubber is highly efficient in removing SOx from flue gas, also when using ordinary tap water, optionally with the particulate matter and ash from the boiler suspended or solubilized therein, as absorbent. In practice almost an efficiency near 100% is reached Tap water is usually readily available also at remotely placed locations e.g. farms. The use of the particular mater and ash from the boiler also save cost for other alkaline chemicals such as burned lime (CaO) or caustic soda (NaOH) as well as costs for disposal of the ash and collected particular matter from the process is saved.

The amount of SOx present in the waste gas varies significantly depending on the biomaterial that is fed to the boiler and/or dried in the drying apparatus from which the flue gas originates.

Therefore, the scrubber is usually over dimensioned to ensure that even top peak contents of SOx are trapped.

Similarly, the amount of particulates present in the flue gas varies significantly.

Preferably, a demister is arranged at the gas exit end of the wet scrubber. The demister removes droplets of water / scrubber liquid. This reduces the heat consumption in the flue gas re-heater arranged downstream to the wet scrubber, because the need for evaporating water present as droplets/mist in the flue gas exiting the wet scrubber is eliminated or at least greatly reduced.

The system further comprises at least two particulate removal units. The particulate removal units are preferably cyclones, particulate filters or cyclones with a built-in particulate filter. The latter is preferred because it has turned out to be particularly effective in removing particles. The particulate removal units are in the following just mentioned as particulate removal units or cyclones. The particulate removal units are arranged downstream to the wet scrubber. Preferably, the particulate filter used (alone or in the cyclone) is a micro filter that is able to remove any particulate matter, especially in the green field gap. A suitable filter is a microfilter having a pore size of up to 10 µm. The filters usually build up a filter cake of adhered particulate matter on the surface of the filter between each cleaning cycle. This filter cake further assists in catching particulate matter having a size within the green gap, because the pore size through this "filter cake" is less than the filter's pore size.

The particulate removal units are preferably arranged in parallel. This allows for using one of the particulate removal units for particulate removal from the flue gas, while regenerating or cleaning another. A flue gas heater is arranged between the wet scrubber and the particulate removal units in order to reheat the flue gas and thus optimize the function of the particulate removal units. If the flue gas is sent to the particulate removal units with a temperature below the dew point, the flue gas will contain droplets of water. These droplets will cause dust to adhere to surfaces in the particulate removal unit. The particulate removal is preferably cyclones and may further comprise a particulate filter. When the cyclones further comprise a particulate filter arranged to filter the outlet gas from the cyclone, these filters are very easily blocked by dust adhering to a wet surface of the filter media. Such blocked filters are almost impossible to clean properly, and results in reduced lifetime of the filters as they need to be exchanged.

Therefore, the flue gas heater is arranged between the wet scrubber and the cyclones. The flue gas heater comprises a heating jacket surrounding at least a certain length of the flue gas duct between the wet scrubber and the particulate removal cyclones. The heating medium in the flue gas heater is heated oil or heated water.

The preferred flue gas heater comprises a heating jacket that surrounds the flue gas duct at a certain length between the wet scrubber and the particulate removal units. A heating medium, typically oil or water, is introduced into the heating jacket to increase the temperature of the flue gas to above the dew point. The temperature is typically increased by the flue gas heater to a temperature of 2-25 °C above the dew point, such as to a temperature 52 to 75 °C if the gas temperature out of the scrubber is 50°C or 62 to 85°C if the gas temperature out of the scrubber is 60°C.

It is preferred to keep the temperature of the flue gas above, but also as close to the dew point as possible in order to minimize the energy consumption for re-heating the flue gas before passing the flue gas to the at particulate removal unit(s). Typically, the flue gas temperature is maintained within 2-10 °C above the dew point when leaving the flue gas re-heater and entering the particulate removal unit(s).

The temperature of the flue gas may initially be increased with 15-25 °C during start-up procedure, so as to ensure that the particulate removal unit(s) are heated to the same temperatures as the flue gas and thereby so as to reduce or eliminate condensation of water in the particulate removal units, especially during start-up procedures.

The preferred heating medium in the flue gas heater/heating jacket is oil, because oil can be circulated at a lower pressure, and therefore results in lower security risks, e.g. in case a leak would occur. The low pressure regime results in that there is no need to apply for safety approval, at least in Denmark and/or EU. Further, the oil can be circulated at higher temperatures.

When the heating medium in the flue gas heater is heated oil, the temperature of the heating medium can be high, and thus higher than when using water as heating medium, and may be e.g. up to 150 °C . This may reduce the size of the flue gas heater. Thus the overall length of heating jacket that surrounds the flue gas duct may be reduced compared to the size of a flue gas heater using liquid water as heating medium.

The flue gas heater is preferably connected with heating media pipes to a boiler, which heats the heating medium or to the heating medium side of a drying apparatus. When used in combination with a drying apparatus using oil (or water) as heating medium, the oil (or water) may be recycled from the boiler that heats the oil (or water) and/or from the drying apparatus, in particular when the flue gas treatment system is installed together with a biomaterial drying system as discussed below. Thus, the present flue gas treatment system is highly suitable for being used together with the drying system and method as described in EP 3155722 B1 (see further above), or as outlined further below.

At least two particulate removal units are arranged downstream to the wet scrubber. The particulate removal units remove fine particles, called dust, from the flue gas as already discussed above

The preferred particulate removal units are cyclones. The cyclones each comprises an inlet and cyclone outlets. A not shown filter is preferably arranged in each of the cyclones between the flue gas inlet and the flue gas outlets.

The particulate removal units are preferably arranged in parallel. This allows for at least one unit, e.g. the first unit, can be taken out of action for cleaning while at least one other unit, e.g. the second unit, is still filtering dust from the flue gas before emitting the flue gas via the stack.

The flue gas sulfur oxides (SOx) and particulates reducing system is preferably built into a standard container. Usually, the system fits into a standard 20 feet container. This allows for easy transport and installation to the place where it is installed. As the flue gas treatment system is typically installed at farms or similar remote sites, such as in connection with e.g. straw fired boilers or drying apparatus as mentioned further below, there is a need for fast and efficient installation. Further, there is no need to build or otherwise provide a separate building to contain the flue gas system.

As already mentioned above the objects of the present invention are also solved by means of a method for reducing/removing particulates and sulfur oxides (SOx) from a flue gas arising from drying of biomaterial and/or from combustion of biomaterial. The method comprises the steps of
- passing a flue gas from a boiler to a wet scrubber,
- reducing the amount of sulfur oxides (SOx) in the flue gas by scrubbing the flue gas with water,
- passing the flue gas through a flue gas heater to reheat the flue gas above the dew point of the flue gas, and
- removing particulates in at least one of two particulate removal units.

The method preferably comprises, as mentioned above in relation to the system, heating the heating medium, in particular oil or water, e.g. in a boiler. Alternatively, the heating medium is passed from the drying apparatus, where it is used as heating medium. The heated heating medium is then passed to a heating jacket surrounding at least part of the length of the flue gas duct between the wet scrubber and the particulate removal units.

As also already mentioned above in relation to the system, the method further comprises passing flue gas to a first particulate removal unit while performing a cleaning cycle in a second particulate removal unit or vice versa.

Preferably, the method further comprises reheating the flue gas in the flue gas heater to a temperature of about 2-25 °C above the dew point temperature (equal to the exit temperature from the scrubber). To save energy, the temperature increase should be as low as possible while still securing that condensation in the later stages is avoided. In practice, the optimal re-heating temperature is therefore determined by ambient temperatures, how well the filter and pipes are insulated and also the size of the installation.

It is especially that condensation is avoided during start-up from cold conditions but also when the gas switches from going through one cyclone/filter to the other. Therefore, the initial increase in the temperature is higher than heating during steady state as already discussed above.

This improves the operation of the cyclones mounted downstream to the flue gas heater and reduces blockage of the particulate removal units, e.g. the cyclones and/or their built-in filters as also discussed above in relation to the system.

As also mentioned above and as outlined in further details below, the method comprises that the flue gas is gas exiting from a drying apparatus that processes manure from an animal barn, and where said manure is preferably mixed with bedding, such as straw, wood shavings, wood chips or saw dust or pellets of combustible biomaterial or combinations thereof.

### Description of the Drawing

The present invention will now be described with reference to the drawing in which
- Fig. 1: shows a perspective view flue gas sulfur oxides (SOx) and particulates removal system for removing sulfur oxides (SOx) and particulates from a flue gas arising from drying of biomaterial and/or from combustion of biomaterial,
- Fig. 2: shows a diagram of the system of fig. 1,

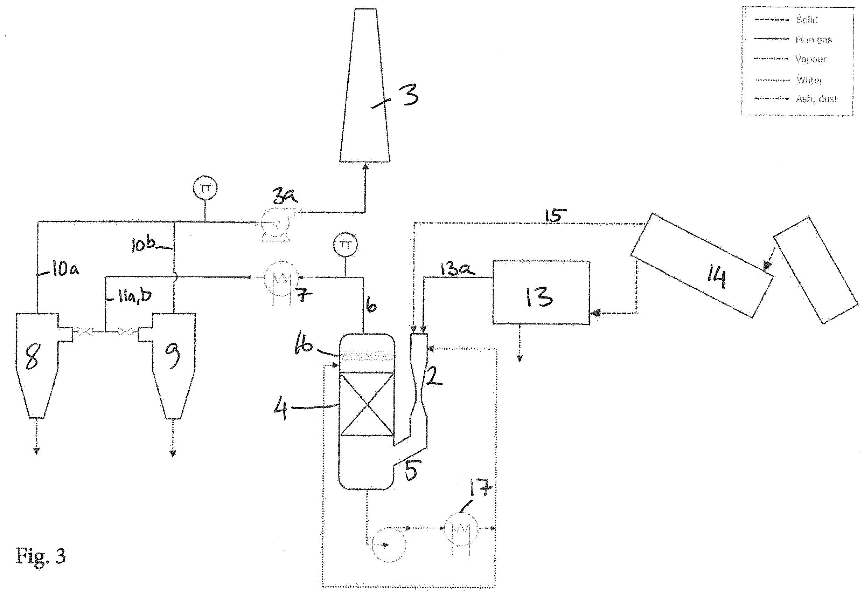

- Fig. 3: shows a diagram of the system of figs. 4a-4b,
- Fig. 4a: shows a side view of the system arranged in a standard container and connected to a drying system for drying spent animal bedding in a rotating drum dryer, and
- Fig. 4b: shows a top view of the system arranged in a standard container and connected to a drying system for drying spent animal bedding in a rotating drum dryer.

### Detailed Description of the Invention

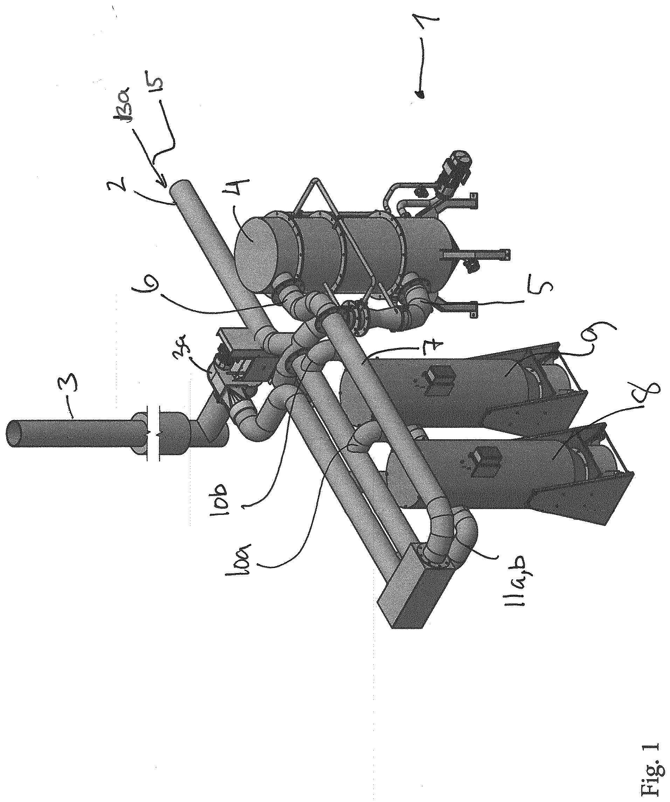

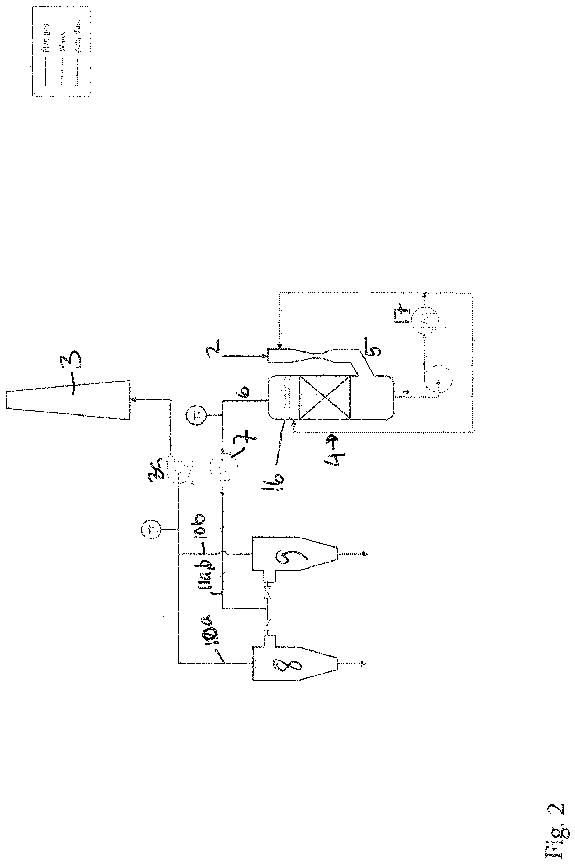

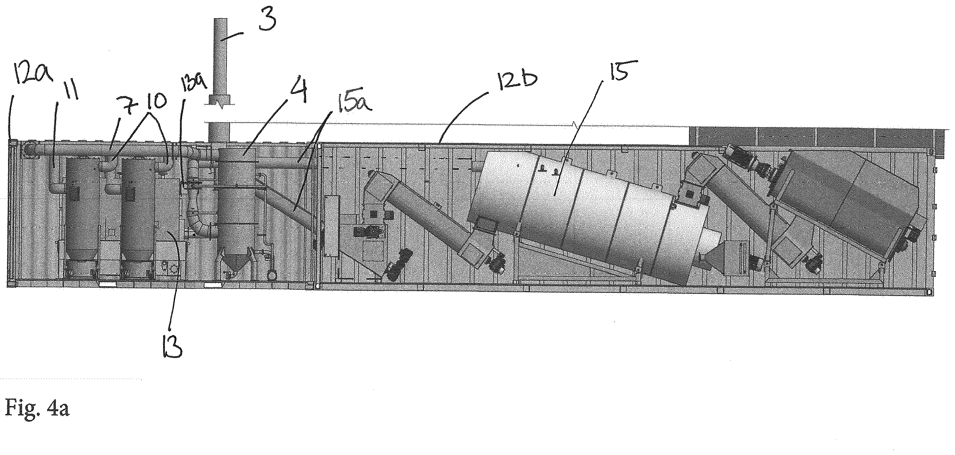

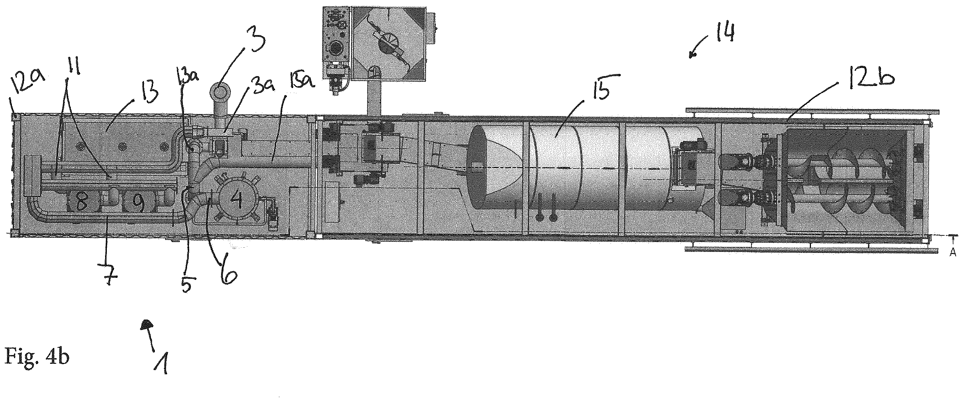

Figs. 1 and 2 show a flue gas sulfur oxides (SOx) and particulates reduction/removal system 1 according to the present invention. The system is for removing or at least reducing the content of gaseous sulfur oxides (SOx) and/or particulates from a flue gas arising from drying of biomaterial in a drying apparatus 14 and/or from combustion of biomaterial in a boiler 13 (see figs. 4a-4b). The flue gas is passed from the boiler 13 and/or the drying apparatus to a stack 3 through a flue gas duct 2 via the flue gas sulfur oxides (SOx) and particulates reduction/removal system 1.

The flue gas treatment system 1 comprise system comprises a wet scrubber 4. The wet scrubber 4 comprises a flue gas inlet 5 in the bottom of the wet scrubber 4 and a flue gas outlet 6 in the top of the wet scrubber 4. Ordinary tap water is provided to the top of the wet scrubber 4.

Ordinary tap water is preferably used as sorbent in the wet scrubber 4. The water is injected into the wet scrubber 4 by a not shown distributor with nozzles arranged in the top of the wet scrubber 4. The liquid sorbent/water thus flows counter current to the flue gas inside the wet scrubber 4. The liquid sorbent traps coarse dust particles (above 10 um) and the very fine particles (below 0.1 um).

In addition to trapping particles, the water/ liquid sorbent absorbs gaseous sulphur oxides, usually mentioned as (SOx), present in the flue gas.

Further, the liquid sorbent traps fly ash particles present in the flue gas. Fly ash is usually alkaline and contains water soluble alkaline salts, e.g. hydroxides and/or carbonates of alkali metals, e.g. Na, K, Ca. Thus the fly ash assists in increasing pH in the liquid sorbent/water which further boosts the absorption of SOx in the water/liquid absorbent.

A demister 16 is arranged in the top of the wet scrubber 4 to trap any droplets in the flue gas before it exits the wet scrubber through the scrubber's outlet 6.

The liquid sorbent's/water's contact with the flue gas also absorbs waste heat from the flue gas. This waste heat may be recovered by transferring the waste heat to e.g. domestic heating facilities in a heat exchanger 17 by heat exchange with a circulating liquid in a central heating system.

This contact between water and flue gas in the wet scrubber 4 also results in evaporation of water whereby the flue gas temperature is reduced. Further the water content in the flue gas is increased. Thereby the temperature of the flue gas becomes very close to or event below the dew point, typically in the range of 40-50 °C.

At least two particulate removal units (cyclones with particulate filters at the outlet; average pore size of particulate filter used in example below is with 10 µm) 8, 9 are arranged downstream to the wet scrubber 4. The particulate removal units / cyclones 8, 9 remove fine particles, called dust, from the flue gas are arranged in parallel. The cyclones 8, 9 each comprises an inlet 10a-b and cyclone outlets 11a-b. A not shown filter is preferably arranged in each of the cyclones between the flue gas inlet 10a, 10b and the flue gas outlets 11a, 11b.

A flue gas heater 7 is arranged between the wet scrubber 4 and the particulate removal cyclones 8, 9. The flue gas heater 7 comprises a heating jacket that surrounds the flue gas duct2, or at least a part thereof, between the wet scrubber 4 and the particulate removal cyclones 8, 9. A heating medium, typically oil or water, is introduced into the heating jacket to increase the temperature of the flue gas to above the dew point. The temperature is typically increased to 2-10 °C above the dew point of the flue gas. At the relevant pressure inside the flue gas duct 2.

The preferred heating medium in the flue gas heater/heating jacket 7 is oil, because oil can be circulated at a lower pressure, and therefore results in lower security risks, e.g. in case a leak would occur. The low pressure regime results in that there is no need to apply for safety approval, at east in Denmark and/or EU. Further, the oil can be circulated at higher temperatures. Further, the oil may be recycled from the boiler 13 and/or the drying apparatus 14, when the flue gas treatment system is installed together with a biomaterial drying system as shown in figs. 4a-4b and as discussed below.

The particulate removal cyclones 8, 9 are arranged in parallel. This allows for at least one cyclone, e.g. the first cyclone 8, can be taken out of action for cleaning while at least one other cyclone, e.g. the second cyclone 9, is still filtering dust from the flue gas before emitting the flue gas via the stack 3.

Optionally, a blower 3a arranged between the cyclones 8, 9 and the stack 3 may assist in expelling the flue gas via the stack.

As shown in figs. 4a-4b the flue gas treatment system 1 is preferably built into a standard container 12a. This provides a modular construction that is easily installed and connected to the biomaterial drying apparatus 14. The modular construction also allows for easily installing the flue gas system in connection with other boilers, e.g. for cleaning flue gas from a decentral straw, or wood fired boiler (e.g. installed at a farm for providing domestic heating and/or heating in production facilities at the farm as already discussed above).

As also shown in figs. 4a-4b the flue gas treatment system is preferably installed in connection with a biomaterial drying apparatus 14. Air expelled from the drier's 14 drying air outlet 14a is transferred to the flue gas duct 2 of the flue gas treatment system 1. This drying system and method is discussed in details in EP 3155722 B1, thus any details discussed herein may be incorporated in the present application by reference. EP 3155722 B1 (which is also discussed in the prior art section above) for utilising heat from a drying plant for drying material in the form of particulate material, e.g. wood chips, shavings, sawdust, straw, wood pellets or bedding, including bedding that has been used in a stable. The condenser arranged at that drying air outlet of the drum dryer as discussed in EP 3155722 B1 may however be omitted. As discussed in EP 3155722 B1, the waste heat in the flue gas from the boiler 13 may be utilized in a central heating system by means transferring waste heat in the flue gas to a circulating central heating fluid, typically water. This may also be included according to the present invention, preferably before the untreated flue gas enters the wet scrubber. Alternatively or in addition, the waste heat absorbed by the scrubber liquid may be transferred to the central heating system in a heat exchanger.

As shown in figs. 4a-4b the drying apparatus 14 with the biomaterial drying apparatus may also be installed in a container 12b. The drying apparatus includes a drying step in a drum dryer 15, which is heated by hot oil. A boiler 13 for heating the oil to the drying drum 15 receives at least a partial stream of the dried biomaterial that exits the drying drum 15. The flue gas from the boiler 13 as well as the drying air from the drying drum 15 is transmitted to the flue gas duct 2 of flue gas treatment system 1 and treated, as described above in the wet scrubber 4 and the cyclones 8, 9 before expelling the flue gas via the stack 3 for transmitting the combustion heat from flue gas to the oil before the oil is returned to the drying chamber. Heated oil from the drying drum 15 and/or the boiler is transferred to the heating jacket 7 of the flue gas heater 7 arranged between the wet scrubber 4 and the cyclones 8, 9.

Example:
The emission of dust was tested using a test setup with at Passat 120kW boiler connected to a flue gas treatment system as shown in figs. 1-2. The boiler was fed with dried horse manure mixed with spent saw dust and/or straw bedding.
The outdoor pressure showed a pressure of 1024 mbar. The wet scrubber was operated with a water flow of 10 kg / Nm³ flue gas.

A gas flow sensor detects the gas flow (in m³) in raw/untreated flue gas (before the treatment system) as well as the content of dust in the raw/untreated flue gas (by measuring the weight of a filter arranged in the flue gas flow after a specified running time). Further, an O₂ sensor is installed in the raw/untreated flue gas flow.

The same parameters were measured after the cyclones as well. Results are shown in table 1 below.

The dust content before as well as after the flue gas treatment system was calculated to a reference level using a standardized level of 10 % (by volume based on dry gas) O₂ in the flue gas flow, where the gas flow is calculated in Nm³ (i.e. at 0 °C, 1 atm.)

| Raw gas | | | | | Dust emission | | |
|---|---|---|---|---|---|---|---|
| Start time | Stop time | Gas flow detector (m3) | O2 sensor (%) | Filter (Weight of dust on filter) | mg/m3 | mg/Nm3 (10% O2) | Effect Dust removal in % of raw gas content |
| 10:57 | 11:17 | 0.173 | 7.1 | 382.8 | 2314 | 1828 | |
| 11:40 | 12:10 | 0.255 | 7.7 | 540.6 | 2217 | 1838 | |
| 12:33 | 13:03 | 0.263 | 7.6 | 577 | 229 | 1882 | |
| Purified gas | | | | | Dust emission (after scrubber and cyclones) | | |
| 10:57 | 11:17 | 0.638 | 13.7 | 1.6 | 3 | 4 | 99.8 |
| 11:40 | 12:10 | 0.939 | 14.5 | 0 | 0 | 0 | 100 |
| 12:33 | 13:03 | 0.948 | 14.3 | 5.6 | 6 | 10 | 99.5 |

Table 1. Reduction of dust emission from combustion of horse manure mixed with bedding.

In all test runs, SOx removal was 100%. SOx was not detectable in the treated flue gas.

As can be seen, the emission of dust is reduced to below the limit of 20 mg/Nm3 as is the current maximum limit in Germany, which currently holds the most stringent legislation relation to emission of particles in flue gases in Europe.

The following reference numbers are used on the drawing and in the description above:
1. flue gas treatment system
2. flue gas duct
3. stack
   a. blower
4. wet scrubber
5. flue gas inlet in wet scrubber
6. flue gas outlet in wet scrubber
7. flue gas heater/heating jacket
8. first cyclone
9. second cyclone
10. cyclone inlets
   a. first cyclone
   b. second cyclone
11. cyclone outlets
   a. first cyclone
   b. second cyclone
12. container
   a. for flue gas treatment system
   b. for drying apparatus
13. boiler
   a. flue gas outlet
14. drying apparatus
15. drum dryer
   a. Drying air exit
16. Demister
17. Sorbent heat exchanger

## Claims

1. Flue gas sulfur oxides (SOx) and particulates reduction/removal system for reducing or removing particulates and sulfur oxides (SOx) from a flue gas arising from drying of biomaterial and/or from combustion of biomaterial, and where said flue gas is passed from a boiler and/or a drying apparatus to a stack through a flue gas duct, and where said system comprises
- a wet scrubber,
- at least two particulate removal units arranged downstream to the wet scrubber, and wherein a flue gas heater is arranged between the wet scrubber and the particulate removal units.

2. Flue gas sulfur oxides (SOx) and particulates reduction system according to claim 1, wherein the flue gas heater comprises a heating jacket surrounding at least a certain length of the flue gas duct between the wet scrubber and the particulate removal cyclones.

3. Flue gas sulfur oxides (SOx) and particulates reduction system according to claim 1 or 2, wherein the heating medium in the flue gas heater is heated oil or heated water.

4. Flue gas sulfur oxides (SOx) and particulates reduction system according to any of the preceding claims, wherein the particulate removal units are cyclones, which comprises a filter.

5. Flue gas sulfur oxides (SOx) and particulates reduction system according to any of the preceding claims, wherein the particulate removal units are cyclones particulate filters or a combination thereof.

6. Flue gas sulfur oxides (SOx) and particulates reduction system according to any of the preceding claims, wherein the particulate removal units are arranged in parallel.

7. Flue gas sulfur oxides (SOx) and particulates reduction system according to any of the preceding claims, wherein the wet scrubber comprises means for adding water as SOx absorbent medium.

8. Flue gas sulfur oxides (SOx) and particulates reduction system according to any of the preceding claims, wherein the flue gas heater is connected with heating medium pipes to a boiler, which heats the heating medium or to the heating medium side of drying apparatus.

9. Flue gas sulfur oxides (SOx) and particulates reduction system according to any of the preceding claims, wherein the system is built into a standard container.

10. A method for the reduction of the content of sulfur oxides (SOx) and particulates from a flue gas arising from drying of biomaterial and/or from combustion of biomaterial, comprising the steps of
- passing a flue gas from a boiler and/or drying air from a drying stage to a wet scrubber,
- reducing the amount of particulates as well as sulfur oxides (SOx) in the flue gas by scrubbing the flue gas with water,
- passing the flue gas through a flue gas heater to reheat the flue gas above the dew point of the flue gas, and
- removing particulates in at least one of two particulate removal units.

11. A method for reduction of sulfur oxides (SOx) and particulates from a flue gas according to claim 10, which further comprises heating the heating medium, in particular oil or water, in a boiler and passing the heating medium to a heating jacket surrounding at least part of the flue gas duct between the wet scrubber and the particulate removal units.

12. A method for reduction of sulfur oxides (SOx) and particulates from a flue gas according to claim 10 or 11, which further comprises passing flue gas to a first particulate removal unit while performing a cleaning cycle in a second particulate removal unit or vice versa.

13. A method for reduction of sulfur oxides (SOx) and particulates from a flue gas according to any of the claims 10 to 12, which further comprises reheating the flue gas in the flue gas heater to a temperature of 2-25 °C above the dew point.

14. A method for reduction of sulfur oxides (SOx) and particulates from a flue gas according to any of the claims 10 to 13, wherein the flue gas is gas exiting from a drying apparatus that processes manure from an animal barn and/or the boiler thereof, and where said manure is preferably mixed with bedding, such as straw, wood shaving, wood chips or saw dust or pellets of combustible biomaterial or combinations thereof.

15. A method for reduction of sulfur oxides (SOx) and particulates from a flue gas according to any of the claims 10 to 14, wherein the liquid sorbent in the scrubber traps fly ash particles containing water soluble alkaline salts, e.g. hydroxides and/or carbonates of alkali metals, especially Na, K, Ca, and thereby maintains a sufficient high pH value of the water used as sorbent in the scrubber.
